# EUROPEAN PATENT APPLICATION

(11) **EP 4 161 027 A1**
(43) Date of publication of application: **05.04.2023**
(21) Application number: 22197960.2
(22) Date of filing: 27.09.2022
(51) Int. Cl.: H04L 45/302, H04W 28/08, H04W 40/24, H04W 40/02

(54) **URSP ENHANCEMENT FOR EPS**

(30) Priority: 30.09.2021 US 202163250304 P; 06.09.2022 US 202217903283
(71) Applicant: MediaTek Inc., Hsinchu City 30078 (TW)
(72) Inventor: HUANG-FU, Chien-Chun, 30078 Hsinchu City (TW); KU, Chia-Yu, 30078 Hsinchu City (TW); LIN, Yu-Hsin, 30078 Hsinchu City (TW)
(74) Representative: Habermann, Hruschka & Schnabel

(57) **Abstract**

A method for route selection policy (URSP) rule matching enhancement in EPS is proposed. When an application is executed, the upper layer of a UE sends the application information to URSP entity for matching a URSP rule. The UE selects and evaluates a route selection descriptor (RSD) from a list of RSDs of a selected URSP rule to be matched with a PDN connection. If there is a "PDU session pair ID type" and/or "RSN type" route selection descriptor components in an RSD, such RSD components are intended for a redundant PDU session, which is not supported in EPS. Therefore, the UE ignores the specific RSD components and continues to evaluate the RSD with the remaining RSD components.

## Description

### CROSS REFERENCE TO RELATED APPLICATIONS

This application claims priority under 35 U.S.C. §119 from U.S. Provisional Application Number 63/250,304, entitled "URSP Enhancement for EPS", filed on September 30, 2021, the subject matter of which is incorporated herein by reference.

### TECHNICAL FIELD

The disclosed embodiments relate generally to wireless communication, and, more particularly, to method of UE route selection policy (URSP) procedure enhancement for 4G evolved packet system (EPS).

### BACKGROUND

The wireless communications network has grown exponentially over the years. A Long-Term Evolution (LTE) system offers high peak data rates, low latency, improved system capacity, and low operating cost resulting from simplified network architecture. LTE systems, also known as the 4G system, also provide seamless integration to older wireless network, such as GSM, CDMA, and Universal Mobile Telecommunication System (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs). The 3^{rd} generation partner project (3GPP) network normally includes a hybrid of 2G/3G/4G systems. The Next Generation Mobile Network (NGMN) board has decided to focus the future NGMN activities on defining the end-to-end requirements for 5G new radio (NR) systems (5GS).

The UE policies for 5GS include UE route selection policy (URSP) and access network discovery and selection policy (ANDSP). The UE policies can be delivered from a Policy Control Function (PCF) to UE. PCF takes care of network policies to manage network behavior. PCF gets the subscription information from Unified Data Management (UDM). PCF interfaces to both Access and Mobility Function (AMF) to manage the mobility context and Session Management Function (SMF) to manage the session contexts. PCF also plays a crucial role in providing a schema for network slicing and roaming. PCF triggers the URSP which enables the UE to determine how a certain application should be handled in the context of an existing or new PDN connection in EPS or PDU session in 5GS.

In 4G evolved packet system (EPS), a Packet Data Network (PDN) connectivity procedure is an important process when LTE communication system accesses to the packet data network. The purpose of PDN connectivity procedure is to setup a default EPS bearer between a UE and the packet data network. In 5G, a Protocol Data Unit (PDU) session establishment is a parallel procedure of the PDN connectivity procedure in 4G. A PDU session defines the association between the UE and the data network that provides a PDU connectivity service. When an application is executed, the upper layer of the UE sends the application information to the URSP entity for matching a URSP rule (i.e., by evaluating the traffic descriptor), and use the corresponding RSD (Route Selection Descriptor) of the selected URSP rule to associate with an existing PDU session or to establish a new PDU session. The UE tries to reuse an existing PDU session.

The concept of "redundant PDU session" is introduced for URLLC (Ultra Reliable and Low Latency Communication) applications in 5G. The 5GSM sublayer may support establishment of redundant PDU sessions. In order to establish a set of two redundant PDU sessions, a UE can include a PDU session pair ID, an RSN, or both in a PDU SESSION ESTABLISHMENT REQUEST message for each of the two redundant PDU sessions. The UE can set the PDU session pair ID, the RSN, or both according to URSP or UE local configuration. In addition, an SMF can handle two PDU sessions as redundant even if the UE provides neither a PDU session pair ID nor an RSN in a PDU SESSION ESTABLISHMENT REQUEST message for each PDU session.

While the URSP mechanism can be executed in EPS, "PDU session pair ID" or "RSN" of the redundant PDU session, however, is not supported in EPS. When the RSD of a selected URSP rule comprising parameters for redundant PDU session, e.g., "PDU session pair ID type", and/or "a redundancy sequency number (RSN) type" is evaluated, it is not defined on how UE should handle the specific RSD components intended only for redundant PDU sessions.

A solution is sought.

### SUMMARY

A method for UE route selection policy (URSP) rule matching enhancement in an evolved packet system (EPS) is proposed. When an application is executed, the upper layer of a UE sends the application information to URSP entity for matching a URSP rule. The UE selects and evaluates a route selection descriptor (RSD) from a list of RSDs of a selected URSP rule to be matched with a PDN connection. If there is a "PDU session pair ID type" and/or "RSN type" route selection descriptor components in an RSD, such RSD components are intended for a redundant PDU session, which is not supported in EPS. Therefore, the UE ignores the specific RSD components and continues to evaluate the RSD with the remaining RSD components. In one example, the UE finds the traffic descriptor in the selected URSP rule matching the application and an existing PDN connection matching at least one of the RSDs of the selected URSP rule, even though the RSD comprises a "PDU session pair ID type" and/or "RSN type" components.

In one embodiment, a UE initiates a UE Route Selection Policy (URSP) rule matching procedure in an evolved packet system (EPS) mobile communication network. The UE selects a URSP rule from one or more URSP rules. The UE matches a traffic descriptor of the selected URSP rule with an application information. The UE selects and evaluating a route selection descriptor (RSD) from a list of RSDs of the selected URSP rule to be matched with a PDN connection. The RSD has a list of stored RSD components comprising a PDU session pair ID or a redundancy sequency number (RSN). The UE ignores the PDU session pair ID or ignores the RSN or skips both components for the RSD evaluation. The UE continues with the RSD evaluation for the URSP rule matching procedure in EPS.

Other embodiments and advantages are described in the detailed description below. This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 illustrates an exemplary 5G network 100 supporting User Equipment (UE) route selection policy (URSP) handling with enhancement for evolved packet system (EPS) in accordance with one novel aspect.
Figure 2 illustrates simplified block diagrams of a user equipment (UE) and a base station in accordance with embodiments of the current invention.
Figure 3 illustrates the content of a URSP rule as defined in 3GPP specification and parameters for enhanced URSP rule matching in EPS.
Figure 4 illustrates examples of URSP rule matching in EPS for an application, where certain RSD components of an RSD of a selected URSP rule are ignored.
Figure 5 illustrates a sequence flow between a UE and the network for enhanced URSP rule matching in EPS in accordance with one novel aspect.
Figure 6 is a flow chart of a method of enhanced URSP rule matching in accordance with one novel aspect of the present invention.

### DETAILED DESCRIPTION

Reference will now be made in detail to some embodiments of the invention, examples of which are illustrated in the accompanying drawings.

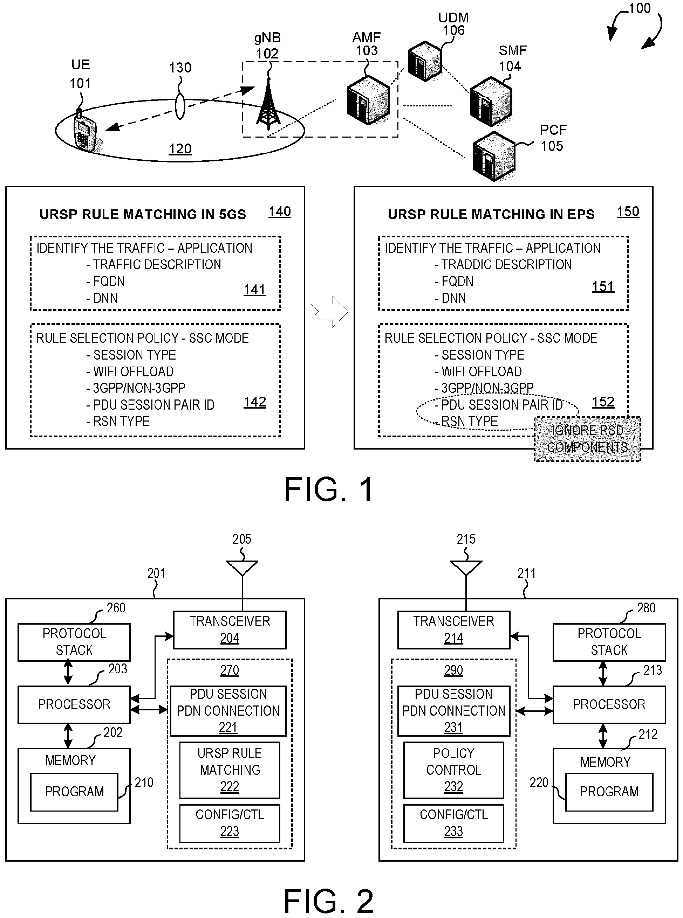

Figure 1 illustrates an exemplary 5G network 100 supporting User Equipment (UE) route selection policy (URSP) handling with enhancement for evolved packet system (EPS) in accordance with one novel aspect. 5G new radio (NR) system (5GS) 100 comprises a user equipment UE 101, a base station gNB 102, an access and mobility management function (AMF) 103, a session management function (SMF) 104, a policy control function (PCF) 105, and a unified data management (UDM) 106. In the example of Figure 1, UE 101 and its serving base station gNB 102 belong to part of a radio access network RAN 120. In Access Stratum (AS) layer, RAN 120 provides radio access for UE 101 via a radio access technology (RAT). In Non-Access Stratum (NAS) layer, AMF 103 communicates with gNB 102 and 5GC for access and mobility management of wireless access devices in 5G network 100. UE 101 may be equipped with a radio frequency (RF) transceiver or multiple RF transceivers for different application services via different RATs/CNs. UE 101 may be a smart phone, a wearable device, an Internet of Things (IoT) device, and a tablet, etc.

5GS networks are packet-switched (PS) Internet Protocol (IP) networks. When UE joins a 5GS network, a PDU address (i.e., the one that can be used on the PDU) is assigned to the UE for its connection to the PDU. In 4G, EPS has defined a Default EPS Bearer to provide the IP Connectivity. In 5G, a Protocol Data Unit (PDU) session establishment procedure is a parallel procedure of a PDN connection procedure in 4G. A PDU session (e.g., 130) defines the association between the UE and the data network that provides a PDU connectivity service. Each PDU session is identified by a PDU session ID, and may include multiple QoS flows and QoS rules.

The UE policies for 5GS include UE route selection policy (URSP) and access network discovery and selection policy (ANDSP). The UE policies can be delivered from Policy Control Function (PCF) to UE. PCF takes care of network policies to manage network behavior. PCF gets the subscription information from Unified Data Management (UDM). PCF interfaces to both Access and Mobility Function (AMF) to manage the mobility context and Session Management Function (SMF) to manage the session contexts. PCF also plays a crucial role in providing a scheme for network slicing and roaming. PCF provisions the URSP which enables the UE to determine how a certain application should be handled in the context of an existing or new PDU session. The UE policies can also be pre-configured in the UE (USIM or NVRAM). The pre-configured policy should be applied by UE only when UE has not received the same type of policy from the PCF.

The concept of "redundant PDU session" is introduced for URLLC (Ultra Reliable and Low Latency Communication) applications. The 5GSM sublayer may support establishment of redundant PDU sessions. In order to establish a set of two redundant PDU sessions, a UE can include a PDU session pair ID, an RSN, or both in a PDU SESSION ESTABLISHMENT REQUEST message for each of the two redundant PDU sessions. The UE can set the PDU session pair ID, the redundancy sequency number (RSN), or both according to URSP or UE local configuration. While URSP is a 5G technique that allows the PCF to provision UE with rules related to data routing, such URSP mechanism in 5GS can be executed in EPS. The concept of "PDU session pair ID" or "RSN" of redundant PDU session, however, is not applicable in EPS.

In one novel aspect, a method for UE route selection policy (URSP) rule matching enhancement in EPS is proposed. In 5GS, the URSP mechanism is depicted by 140. When an application is executed, the upper layer of a UE sends the application information to URSP entity for matching a URSP rule with traffic descriptor (141). The UE selects and evaluates a route selection descriptor (RSD) from a list of RSDs of a selected URSP rule to be matched with a PDU session (142). In one example, the UE finds the traffic descriptor in the selected URSP rule matching the application and an existing PDU session matching at least one of the RSDs of the selected URSP rule.

In EPS, the URSP mechanism is depicted by 150. When an application is executed, the upper layer of a UE sends the application information to URSP entity for matching a URSP rule with traffic descriptor (151). The UE selects and evaluates a route selection descriptor (RSD) from a list of RSDs of a selected URSP rule to be matched with a PDN connection (152). If there is a "PDU session pair ID type" and/or "RSN type" route selection descriptor components in an RSD, such RSD components are intended for a redundant PDU session, which is not supported in EPS. Therefore, the UE ignores the specific RSD components and continues with URSP matching for remaining RSD components. In one example, the UE finds the traffic descriptor in the selected URSP rule matching the application and an existing PDN connection matching at least one of the RSDs of the selected URSP rule, even though the RSD comprises a "PDU session pair ID type" and/or "RSN type" components for redundant PDU session.

Figure 2 illustrates simplified block diagrams of wireless devices, e.g., a UE 201 and network entity 211 in accordance with embodiments of the current invention. Network entity 211 may be a base station combined with an MME or AMF. Network entity 211 has an antenna 215, which transmits and receives radio signals. A radio frequency RF transceiver module 214, coupled with the antenna, receives RF signals from antenna 215, converts them to baseband signals and sends them to processor 213. RF transceiver 214 also converts received baseband signals from processor 213, converts them to RF signals, and sends out to antenna 215. Processor 213 processes the received baseband signals and invokes different functional modules to perform features in base station 211. Memory 212 stores program instructions and data 220 to control the operations of base station 211. In the example of Figure 2, network entity 211 also includes protocol stack 280 and a set of control functional modules and circuit 290. PDU session handling circuit 231 handles PDU session/PDN connection establishment and modification procedures. Policy control module 232 that configures policy rules for UE. Configuration and control circuit 233 provides different parameters to configure and control UE of related functionalities including mobility management and session management.

Similarly, UE 201 has memory 202, a processor 203, and radio frequency (RF) transceiver module 204. RF transceiver 204 is coupled with antenna 205, receives RF signals from antenna 205, converts them to baseband signals, and sends them to processor 203. RF transceiver 204 also converts received baseband signals from processor 203, converts them to RF signals, and sends out to antenna 205. Processor 203 processes the received baseband signals and invokes different functional modules and circuits to perform features in UE 201. Memory 202 stores data and program instructions 210 to be executed by the processor to control the operations of UE 201. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines. A processor in associated with software may be used to implement and configure features of UE 201.

UE 201 also comprises a set of functional modules and control circuits to carry out functional tasks of UE 201. Protocol stacks 260 comprise application layer and other upper layers to manage different applications, Non-Access-Stratum (NAS) layer to communicate with an AMF entity connecting to the core network, Radio Resource Control (RRC) layer for high layer configuration and control, Packet Data Convergence Protocol/Radio Link Control (PDCP/RLC) layer, Media Access Control (MAC) layer, and Physical (PHY) layer. System modules and circuits 270 may be implemented and configured by software, firmware, hardware, and/or combination thereof. The function modules and circuits, when executed by the processors via program instructions contained in the memory, interwork with each other to allow UE 201 to perform embodiments and functional tasks and features in the network. In one example, the upper layer entities request information of the PDU session via which to send a PDU of an application, system modules and circuits 270 comprise a PDU session/PDN connection handling circuit 221 that performs PDU session/PDN connection establishment and modification procedures with the network, a URSP rule matching circuit 222 that performs URSP rule matching, and a configuration and control circuit 223 that handles configuration and control parameters for mobility management and session management.

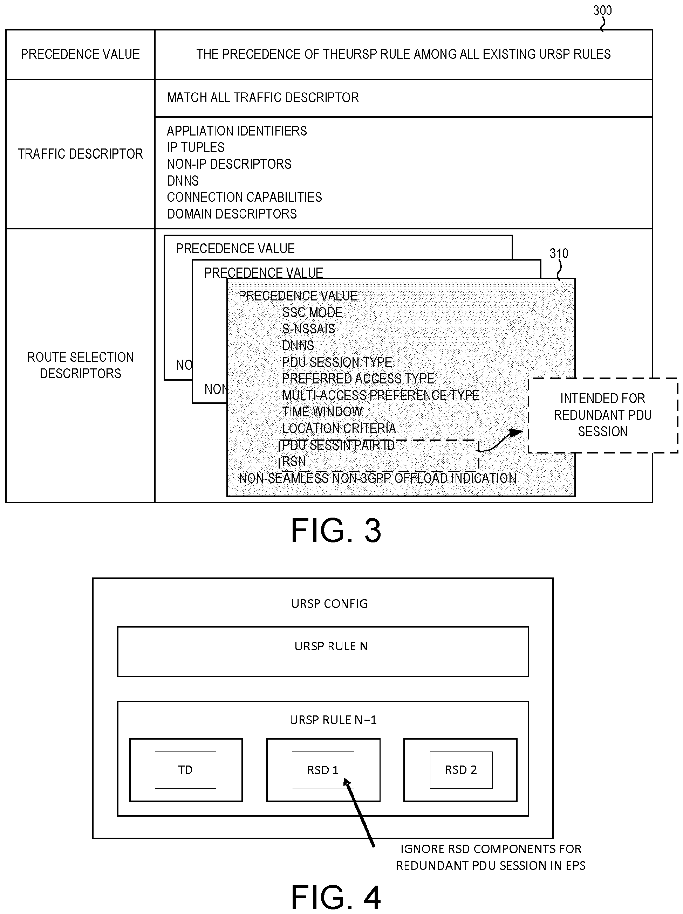

Figure 3 illustrates the content of a URSP rule as defined in 3GPP specification and parameters for enhanced URSP rule matching. URSP is defined as a set of one or more URSP rules. As depicted by Table 300, each URSP rule is composed of: 1) a precedence value of the URSP rule identifying the precedence of the URSP rule among all the existing URSP rules; 2) a traffic descriptor; and 3) one or more route selection descriptors. The traffic descriptor includes either 1) a match-all traffic descriptor; or 2) at least one of the following components: A) one or more application identifiers; B) one or more IP 3 tuples, i.e., the destination IP address, the destination port number, and the protocol used above the IP; C) one or more non-IP descriptors, i.e., destination information of non-IP traffic; D) one or more DNNs; E) one or more connection capabilities; and F) one or more domain descriptors, i.e., destination FQDN(s).

Each route selection descriptor includes a precedence value of the route selection descriptor and either 1) one PDU session type and, optionally, one or more of the followings: A) session and service continuity (SSC) mode; B) one or more S-NSSAIs; C) one or more DNNs; D) PDU session type; E) preferred access type; F) multi-access preference; G) time window; H) location criteria; I) PDU session pair ID; and J) RSN; or 2) non-seamless non-3GPP offload indication. Only one URSP rule in the URSP can be a default URSP rule and the default URSP rule should contain a match-all traffic descriptor. If a default URSP rule and one or more non-default URSP rules are included in the URSP, any non-default URSP rule should have lower precedence value (i.e., higher priority) than the default URSP rule.

URSP is used by the UE to determine if a detected application can be associated to an established PDU session, can be offload to non-3GPP access outside a PDU session, or can trigger the establishment of a new PDU session. A URSP rule includes one traffic descriptor that specifies the matching criteria and one or more of the following RSD components associated with a precedence value: SSC mode selection policy to associated the matching application with SSC mode, network slice selection policy to associated the matching application with S-NSSAI, DNN selection policy to associated the matching application with DNN, PDU session type policy to associated the matching application with a PDU session, time window, location criteria, preferred access type indicating a preferred access (3GPP or non-3GPP) when UE needs to establish a new PDU session for the matching application, multi-access preference type for MA PDU, PDU session pair ID for redundant PDU session, RSN, and non-seamless offload policy to determine that the matching application should be non-seamlessly offloaded to non-3GPP access (i.e., out of a PDU session).

In one novel aspect, when performing URSP rule matching with an application in EPS, the UE matches a traffic descriptor (TD) of a selected URSP rule. The UE then selects a route selection descriptor (RSD) and determines whether the RSD includes a "PDU session pair ID type" or "RSN type" route selection descriptor component or both. If so, then the UE knows that those RSD components are intended to be associated with a redundant PDU session and not applicable for PDN connection in EPS. In order to match the RSD with a PDN connection in EPS, the UE ignores or skips those specific RSD components, e.g., "PDU session pair ID" and "RSN". As a result, this RSD can still be selected by the UE to be associated with an existing PDN connection for URSP rule matching.

Figure 4 illustrates examples of URSP rule matching for an application in EPS, where certain RSD components of an RSD of a selected URSP rule are ignored. When an application is started on a UE in EPS, the UE upper layers trigger URSP rule matching. The UE evaluates the URSP rules, except the default URSP rule, with a traffic descriptor matching the application information in the order of their precedence values. If the UE finds the traffic descriptor (TD) in a non-default URSP rule matching the application information, and an established PDN connection matching at least one of the route selection descriptors of the URSP rule, the UE then provides information on the PDN connection that matches the route selection descriptor (RSD) of the lowest precedence value to the upper layers. Otherwise, the UE selects an RSD with the next smallest precedence value which has not been evaluated. If no matching is found, the UE evaluates the next URSP rules with a TD matching the application information in the order of their precedence values.

As depicted in Figure 4, the UE is configured with multiple URSP rules including URSP rule 1, ..., URSP rule N, URSP rule N+1, ..., and so on so forth. Each URSP rule comprises a TD and a list of RSDs. For example, URSP rule N+1 includes a TD, RSD1 and RSD2. If the UE finds the TD in URSP rule N+1 matching the application information, the UE then selects an RSD, e.g., RSD1, with the next smallest precedence value for URSP rule matching. The UE then determines the RSD components and parameters in RSD1 and tries to match with an existing PDN connection or to create a new PDN connection.

In one novel aspect, the UE also checks whether there are any RSD components for redundant PDU session. For example, the UE determines whether RSD1 includes a "PDU session pair ID type" or "RSN type" route selection descriptor component or both components. If so, then the UE knows that RSD1 is intended to be associated with a redundant PDU session in 5GS, and those RSD components are not applicable for PDN connection in EPS. In one novel aspect, the UE ignores or skips those specific RSD components, e.g., "PDU session pair ID" and "RSN" and continues to evaluate the RSD1 with the remaining RSD components. In one example, by skipping those specific RSD components, the UE finds the TD in URSP rule N+1 matching the application information, and an established PDN connection matching RSD1 of the URSP rule N+1, the UE then provides information on the PDN connection that matches RSD1 to the upper layers. If there is no matched existing PDN, the URSP layer selects RSD from smallest precedence value and check and send request with the parameters(D) PDU session type; E) preferred access type;) in RSD to the NAS layer.

On the other hand, if the UE does not ignore those specific RSD components in RSD1, then the UE will not find RSD1 to be a match to a PDN connection. The UE will then select an RSD (e.g., RSD2) with the next smallest precedence value within URSP rule N+1 which has not been evaluated. The UE may select another RSD or URSP rule that does not best fit the application. Further, the UE may try to establish a new PDN connection. If the PDN connection establishment fails, the UE may continue to retry and wasting time and resource.

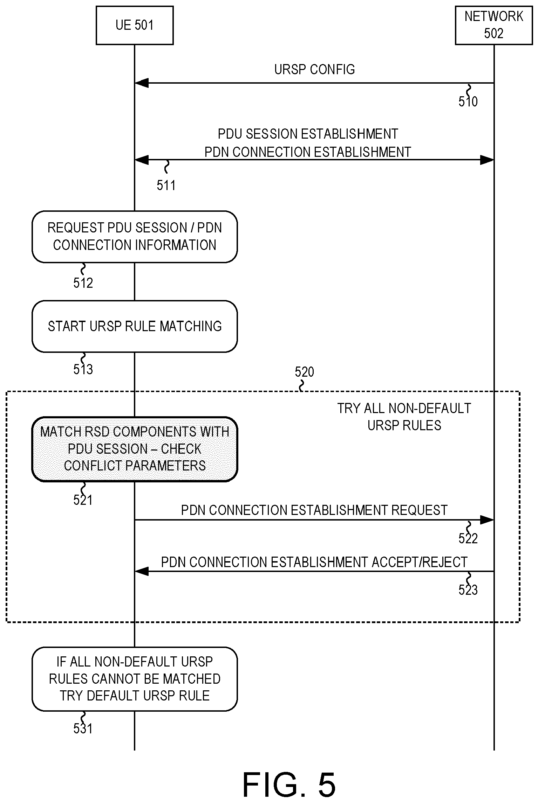

Figure 5 illustrates a sequence flow between a UE and the network for enhanced URSP rule matching for redundant PDU session in accordance with one novel aspect of the present invention. In step 510, network 502 (via PCF) provides URSP configuration or update to UE 501. URSP includes a set of URSP rules, including one default URSP rule. In steps 511, UE 501 establishes a PDU session/PDN connection with network 502. In step 512, upper layers of UE 501 request PDU session/PDN connection information, e.g., triggered by starting an application. In other words, the upper layers of the UE request information of the PDU session/PDN connection via which to send a PDU of an application. In order to determine the association between the application and a PDU session/PDN connection or non-seamless non-3GPP offload, the UE upper layers proceed with the URSP rule matching in step 513.

In step 520, UE 501 tries all non-default URSP rules in an order of the precedence values. Specifically, in step 521, UE 501 selects a matching URSP rule, and then either finds existing PDU session/PDN connection, or establishes new PDU session/PDN connection, that matches at least one of the route selection descriptors of the selected URSP rule. If no matching exists, the UE NAS layer then attempts to establish a new PDU session/PDN connection. For example, in step 522, UE 501 sends a PDN connectivity establishment request to the network. In step 523, the network sends a PDN connectivity establishment accept to UE 501 and the PDN connection is established successfully. Otherwise, the network sends a PDN connectivity establishment reject to UE 501 and the PDN connection is not established. After step 520, if all non-default URSP rules cannot be matched with the application, then in step 531, UE 501 tries the default URSP rule, which includes a match-all traffic descriptor. If the association is still unsuccessful, then UE 501 informs the upper layers of the failure.

If the above URSP procedure is executed in EPS, then in step 521, UE 501 also checks whether there are any RSD components for redundant PDU session. For example, the UE determines whether an RSD of a selected URSP rule includes a "PDU session pair ID type" or "RSN type" route selection descriptor component or both components. If so, then the UE knows that the RSD is intended to be associated with a redundant PDU session in 5GS, and those RSD components are not applicable for PDN connection in EPS. In one novel aspect, the UE ignores or skips those specific RSD components of the RSD, e.g., "PDU session pair ID" and "RSN" and continues with the evaluation and matching between PDN connection and the remaining components of the RSD. If an existing PDN connection matches with the remaining RSD components, then the UE provides information on the PDN connection that matches the RSD of the selected URSP rule to the upper layers. If theUE didn't find any existing PDN matches with the RSD components, the UE send the applicable parameters (DNN(APN), PDU(PDN) type) in step 522.

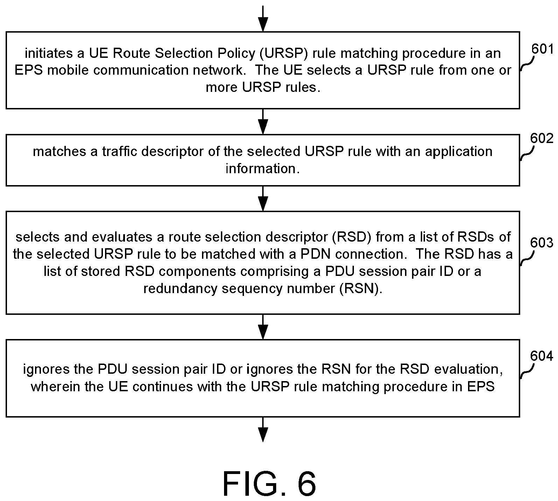

Figure 6 is a flow chart of a method of enhanced URSP rule matching in accordance with one novel aspect of the present invention. In step 601, a UE initiates a UE Route Selection Policy (URSP) rule matching procedure in an evolved packet system (EPS) mobile communication network. The UE selects a URSP rule from one or more URSP rules. In step 602, the UE matches a traffic descriptor of the selected URSP rule with an application information. In step 603, the UE selects and evaluating a route selection descriptor (RSD) from a list of RSDs of the selected URSP rule to be matched with a PDN connection. The RSD has a list of stored RSD components comprising a PDU session pair ID or a redundancy sequency number (RSN). In step 604, the UE ignores the PDU session pair ID or ignores the RSN for the RSD evaluation. The UE continues with the RSD evaluation for the URSP rule matching procedure in EPS.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, comprising:
initiating a UE Route Selection Policy (URSP) rule matching procedure by a User Equipment (UE) in an evolved packet system (EPS) mobile communication network, wherein the UE selects a URSP rule from one or more URSP rules;
matching a traffic descriptor of the selected URSP rule with an application information;
selecting and evaluating a route selection descriptor (RSD) from a list of RSDs of the selected URSP rule to be matched with a PDN connection, wherein the RSD has a list of stored RSD components comprising a PDU session pair ID or a redundancy sequency number (RSN); and
ignoring the PDU session pair ID or ignoring the RSN for the RSD evaluation, wherein the UE continues with the RSD evaluation for the URSP rule matching procedure in EPS.

2. The method of Claim 1, wherein the URSP rule matching procedure is initiated by upper layers of the UE and is triggered by the application.

3. The method of Claim 1, wherein each URSP rule comprises a precedence value, a traffic descriptor, and a list of route selection descriptors.

4. The method of Claim 1, wherein the traffic descriptor comprises application identifiers, IP tuples, non-IP descriptors, data network names, connection capabilities, and domain descriptors.

5. The method of Claim 1, wherein each RSD from the list of RSDs is associated with a precedence value indicating a priority for matching.

6. The method of Claim 1, wherein the UE ignores the PDU session pair ID in the RSD and/or ignores the RSN in the RSD and selects the RSD of the selected URSP rule to match with the PDN connection.

7. A User Equipment (UE), comprising:
an upper layer handling circuit that is configured to initiate a UE Route Selection Policy (URSP) rule matching procedure in a mobile communication network, wherein the UE is configured to select a URSP rule from one or more URSP rules;
a Route Selection Policy (URSP) handling circuit that is configured to match a traffic descriptor of the selected URSP rule with an application information, wherein the UE is configured to select and evaluate a route selection descriptor (RSD) from a list of RSDs of the selected URSP rule to be matched with a PDN connection; and
a control circuit that is configured to determine that the RSD has a list of stored RSD components comprising a PDU session pair ID or a redundancy sequency number (RSN), wherein the UE is configured to ignore the PDU session pair ID or to ignore the RSN for the RSD evaluation, and wherein the UE is configured to continue with the RSD evaluation for the URSP rule matching procedure in EPS.

8. The UE of Claim 7, wherein the URSP rule matching procedure is initiated by upper layers of the UE and is triggered by the application.

9. The UE of Claim 7, wherein each URSP rule comprises a precedence value, a traffic descriptor, and a list of route selection descriptors.

10. The UE of Claim 7, wherein the traffic descriptor comprises application identifiers, IP tuples, non-IP descriptors, data network names, connection capabilities, and domain descriptors.

11. The UE of Claim 7, wherein each RSD from the list of RSDs is associated with a precedence value indicating a priority for matching.

12. The UE of Claim 7, wherein the UE is configured to ignore the PDU session pair ID and/or to ignore RSN in the RSD and to select the RSD of the selected URSP rule to match with the PDN connection.
